# EUROPEAN PATENT APPLICATION

(11) **EP 4 184 979 A1**
(43) Date of publication of application: **24.05.2023**
(21) Application number: 21306615.2
(22) Date of filing: 19.11.2021
(51) Int. Cl.: H04W 12/72, H04W 12/02, H04W 76/00

(54) **A METHOD FOR AN EQUIPMENT COOPERATING WITH A SECURE ELEMENT TO PERFORM THE REGISTRATION TO THE SNPN, CORRESPONDING SECURE ELEMENT AND EQUIPMENT**

(71) Applicant: Thales Dis France SAS, 92190 Meudon (FR)
(72) Inventor: PHAN, Ly Thanh, 13705 LA CIOTAT (FR); VINCENT, Dany, 13705 LA CIOTAT (FR); PAULIAC, Mireille, 13705 LA CIOTAT (FR)
(74) Representative: Scheer, Luc

(57) **Abstract**

The invention concerns in particular a method for an equipment (11) cooperating with a secure element (10) to perform the registration to a SNPN (12) when the equipment (11) requires either the secure element (10) to perform the SUCI calculation or the secure element (10) to provide information for a SUCI calculation by the equipment (11), the secure element (10) comprising a list of SNPN-IDs and a list of Home Network public keys, the method comprising:
A - Sending from the equipment (11) to the secure element (10) a request of a SUCI calculation or a request of information for SUCI calculation including a SNPN-ID of the SNPN (12) to access;
B - upon reception of the request from the equipment (11):
o the secure element (10) selects a Home Network public key from the list of Home Network public keys for computing the SUCI, the Home Network public key corresponding to the Home Network public key of the SNPN (12) identified by the SNPN-ID;
o the secure element (10) or the equipment (11) generates the SUCI with the Home Network public key of the SNPN (12);

C - The equipment (11) performs the registration to the SNPN (12) with the SUCI.

## Description

The invention concerns the telecommunication domain, and in particular 5G telecommunication networks (loT - M2M devices for example).

More precisely, the present invention relates to wireless communications, including providing support in equipments for access to and communication over non-public wireless communication networks, also referred to as private networks. The equipments can be fixed or mobile.

It is known that in 5G networks, the protection of the Permanent Subscriber Identifier (SUPI) that corresponds in previous networks (2G to 4G) to an IMSI, when sent over the air is performed thanks to the SUCI (Subscription Concealed Identifier).

This solution has been developed in order to counter the IMSI catchers in 5G.

IMSI Catching attacks have threatened all generations (2G/3G/4G) of mobile telecommunication for decades. As a result of facilitating backwards compatibility for legacy reasons, this privacy problem appears to have persisted. However, the 3GPP has decided to address this issue, albeit at the cost of backward compatibility. For instance in case of identification failure via a 5G-GUTI (5G Global Unique Temporary Identifier), unlike earlier generations, 5G security specifications allows not plain-text transmissions of the SUPI over the radio interface. To do that, an Elliptic Curve Integrated Encryption Scheme (ECIES) - based privacy-preserving identifier containing the concealed SUPI is transmitted. This concealed SUPI is known as the SUCI.

The SUCI contains an encrypted SUPI.

In case of non-null scheme protection and specific 5G deployment scenarios, the USIM (contained in a smart card, a UICC, a secure element like an embedded UICC (eUICC) or in an integrated UICC (iUICC)) always stores a public key called in 3GPP "Home Network Public Key" used to conceal the SUPI, and the Home Network is able to decipher the SUCI in order to retrieve the SUPI. Currently either the USIM conceals the SUPI with the Home Network Public Key when requested by the ME (Mobile Equipment containing the secure element with which the secure element cooperates) or the ME does the concealment based on Home Network Public Key retrieved from the USIM.

The 3GPP TS 23.501 specification now defines the architecture of Stand-alone Non-Public Networks (SNPNs) i.e. private networks (non-public).

Non-public cellular networks (NPNs) have been deployed in factories, for Internet of Things (loT) devices, as enterprise information technology (IT) networks and the like. In some cases, NPNs are cellular networks specific to an organization or a corporate entity, with content for that entity hosted on private data networks. An NPN may typically be deployed as a standalone NPN (SNPN), which may be operated by an NPN operator that does not rely on network functions provided by a PLMN, or it may be deployed as a public network integrated NPN, which may be a network slice instance of a regular PLMN, for example. Wireless communication devices (UEs) may be classified based on access capability. Such classification may differentiate between UEs which are only authorized to access an NPN or NPN services, UEs which are only authorized to access regular PLMN services, and UEs which may simultaneously access both NPN services as well as PLMN services. In case of 3GPP NR (New Radio), as an example, a UE may be configured with a SUPI and credentials for each SNPN it is authorized to access. Emergency services are currently not supported in SNPN access mode, but studies are being conducted regarding support enablement for emergency calls over NPN in the near future. A SUPI is a 5G/NR globally unique SUPI allocated to each subscriber and defined in 3GPP specification TS 23.501. The SUPI value is provisioned in USIM and Unified Data Management (UDM)/Universal Resources Management (UDR) function in 5G Core, and is usually a string of 15 decimal digits. Onboarding refers to a process by which a new device gains access to a wired or wireless network for the first time. When the UE powers up for the very first time, it may need to determine which network - e.g. which SNPN - to connect to (e.g. to camp or remain on), as there may be requirements (e.g. 3GPP requirements) for the UE not to send a registration request to a SNPN to which the UE has no access. For example, the UE may be required not to send a registration request to a SNPN that the UE is not authorized to access and/or may not have the necessary credentials to access.

Currently, SNPNs are identified using a network identifier (NID) specific to the SNPN. Accordingly, an SNPN is identified overall by using a PLMN ID and an NID [PLMN ID+NID]. The network node (e.g. gNB) that provides access to the NPN may broadcast the PLMN ID and a list of NIDs, which identify each unique NPN. The UE shall reselect to other cells which support this SNPN, e.g. to a cell identified by the broadcasted [PLMN ID+NID]. As part of the registration process, the UE may first camp on (connect to) the cell which supports the [PLMN ID+ND] combination identifying the network that the UE is seeking to access (e.g. the SNPN for which the UE has SUPI credentials). The UE then performs a Non-Access Stratum (NAS) registration procedure, through the corresponding Access and Mobility Management Function (AMF) and Session Management Function (SMF), with the SNPN. The Unified Access Control (UAC) is defined per NPN for access control management.

According to 3GPP specifications TS 33.501, the SNPN is in charge of the decryption of the SUCI.

In some use cases (e.g. onboarding use case), it may happen that the primary authentication is performed by a Credentials Holder, external to the SNPN.

According to 3GPP TS 23.501 a Credentials Holder is an entity which authenticates and authorizes access to an SNPN separate from the Credentials Holder.

The problem is that a Credentials Holder (external to the SNPNs) can be used by several SNPNs to perform the primary authentication of the UE connecting to those SNPNs.

As the SNPN is responsible for the deciphering of the SUCI, the secure element (USIM) has to contain the Home Network Public Key for each of the SNPNs the UE may access, in order to construct the SUCI per SNPN using the corresponding Home Network Public Key.

But the 3GPP specifications have been designed until now for cases where home network and Credentials Holder are the same entity, thus allows the storage of only one Home Network Public Key per USIM.

Consequently, the SUPI can only be sent in clear text without warranting the privacy.

In order to protect the privacy of this confidential information (SUPI), the invention proposes a method for an equipment cooperating with a secure element to perform the registration to a SNPN when the equipment requires either the secure element to perform the SUCI calculation or the secure element to provide information for a SUCI calculation by the equipment, the secure element comprising a list of SNPN-IDs and a list of Home Network public keys, the method comprising:
A - Sending from the equipment to the secure element a request of a SUCI calculation or a request of information for SUCI calculation including a SNPN-ID of the SNPN to access;
B - upon reception of the request from the equipment:
   ∘ the secure element selects a Home Network public key from the list of Home Network public keys for computing the SUCI, the Home Network public key corresponding to the Home Network public key of the SNPN identified by the SNPN-ID;
   ∘ the secure element or the equipment generates the SUCI with the Home Network public key of the SNPN;
C- The equipment performs the registration to the SNPN with the SUCI.

Preferably, the request of a SUCI calculation or the request of information for SUCI calculation also includes a registration reason for indicating to which service the equipment wishes to access through the SNPN, the Home Network public key corresponding to the Home Network public key of the SNPN identified by the SNPN-ID and to the registration reason. Advantageously, the equipment is a mobile equipment.

The invention also concerns a secure element cooperating with an equipment, the secure element being configured for performing a registration with a SNPN when the equipment requires either the secure element to perform a SUCI calculation or the secure element to provide information for a SUCI calculation, the secure element comprising a list of SNPN-IDs and a list of Home Network public keys, the secure element being configured for:
A - Receiving from the equipment a request of a SUCI calculation or a request of information for SUCI calculation including a SNPN-ID of the SNPN to access;
B - upon reception of the request from the equipment:
   ∘ selecting a Home Network public key from the list of Home Network public keys for computing the SUCI, the Home Network public key corresponding to the Home Network public key of the SNPN identified by the SNPN-ID;
   ∘ generating the SUCI with the Home Network public key of the SNPN;
   ∘ sending the SUCI to the equipment, in order that the equipment performs the registration to the SNPN with the SUCI.
   For this secure element, the request of a SUCI calculation or the request of information for SUCI calculation preferably also includes a registration reason for indicating to which service the equipment wishes to access through the SNPN, the Home Network public key corresponding to the Home Network public key of the SNPN identified by the SNPN-ID and to the registration reason.

The invention also concerns an equipment cooperating with a secure element to perform the registration to a SNPN when the equipment requires either the secure element to perform SUCI calculation or the secure element to provide information for a SUCI calculation, the secure element comprising a list of SNPN-IDs and a list of Home Network public keys, the equipment being configured for:
A - Sending to the secure element a request of a SUCI calculation or a request of information for SUCI calculation including a SNPN-ID of the SNPN to access;
B - after the secure element has selected a Home Network public key from the list of Home Network public keys for computing the SUCI, the Home Network public key corresponding to the Home Network public key of the SNPN identified by the SNPN-ID:
   ∘ Generating by the secure element the SUCI with the Home Network public key of the SNPN and sending the SUCI to the equipment, or
   ∘ Generating by the equipment the SUCI with the Home Network public key of the SNPN, sent to the equipment by the secure element;
C - Performing the registration to the SNPN with the SUCI.

For this equipment, the request of a SUCI calculation or the request of information for SUCI calculation preferably also includes a registration reason for indicating to which service the equipment wishes to access through the SNPN, the Home Network public key corresponding to the Home Network public key of the SNPN identified by the SNPN-ID and to the registration reason.

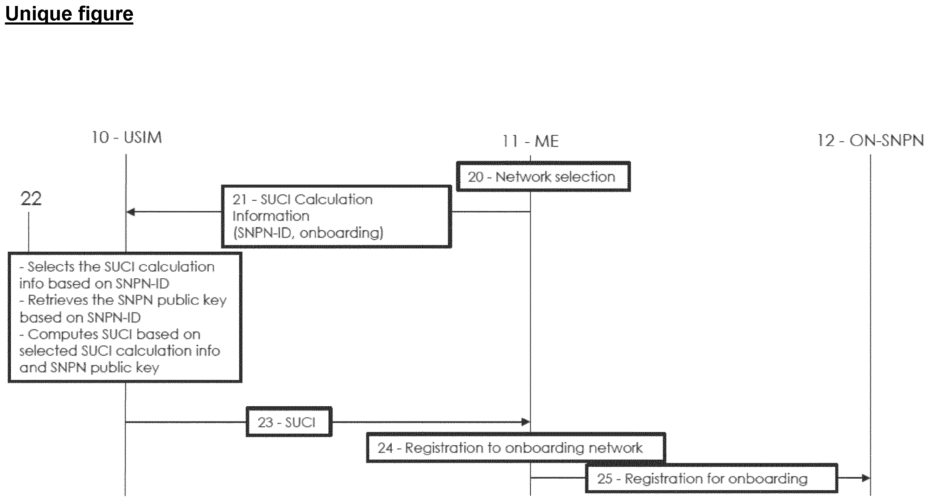

The invention will be better understood by reading the following description of a preferred embodiment of the invention that describes the unique figure showing a flowchart of the exchanges between different entities.

The purpose of the invention is to provide a method for an equipment cooperating with a secure element to perform the registration to a SNPN when the equipment requires either the secure element to provide the SUCI or the secure element to provide information for a SUCI calculation. In the unique figure, three entities are represented: A secure element 10 (here noted USIM), a mobile equipment (ME) 11, typically a smartphone, and an ON-SNPN 12 (Onboarding SNPN). The ON-SNPN is only shown as an example, a NPN or SNPN can also be used. The secure element 10 cooperates with the ME 11, by contact or wirelessly.

The first step represented is step 20 where the ME 11 detects an ON-SNPN. Here, it detects ON-SNPN 12 and selects this private network 12.

At step 21, the ME 11 sends to the USIM 10 a request of a SUCI calculation. This request contains the SNPN-ID of the ON-SNPN 12 and a facultative information (it can also be for example an onboarding information, a pre-onboarding information or the final server to which the ME 11 wants to connect through the SNPN 12 for accessing a service, for example to a consumer server or an loT server to which the SNPN 12 is connected). If such a facultative information is added to the SNPN-ID, the public key mentioned below corresponds to the public key of the SNPN 12 identified by the SNPN-ID and to the registration reason (the service to which the secure element wants to access, for example a mobile service for a consumer product or an loT application).

The USIM 10 stores a list of public keys, each public key being associated to a SNPN-ID.

In case no other information than the SNPN-ID is sent to the USIM 10, at step 22, the USIM, upon reception of the request from the equipment:
- selects a public key from the list of public keys for computing the SUCI, the public key corresponding to the Home Network public key of the SNPN identified by the SNPN-ID;
- generates the SUCI with the Home Network public key of the SNPN;

The USIM 10 then sends (at step 23) the computed SUCI to the ME 11.

At step 24, the ME 11 then detects a registration request of the USIM 10 with the ON-SNPN 12 and, and step 25, the ME 11 registers itself with the ON-SNPN 12 thanks to the computed SUCI that the ON-SNPN 12 will decipher with its private key.

The ME 11 is then connected to the ON-SNPN 12 and can communicate with it like it would communicate with its home PLMN.

In this example, the key used for computing the SUCI is the Home Network public key of the ON-SNPN 12. If the ON-SNPN is able to provide more than one service, the SNPN-ID is sent (at step 21) with a registration reason for indicating to which service the equipment wishes to access through the SNPN. The public key then corresponds to the public key of the SNPN identified by the SNPN-ID and to the registration reason (access to which service is requested by the ME 11). The SNPN 12 can therefore have multiple public keys, each public key corresponding to a given service.

As already said, the equipment 11 can be a fixed or a mobile equipment.

The computation of the SUCI can be done by the secure element 10 (as represented) but the SUCI can also be computed by the ME 11. In this last configuration, the public key of the SNPN is sent from the secure element 10 to the ME 11. The ME 11 has stored in a memory the SUPI of the secure element 10 or retrieves this SUPI from the secure element 10. The ME 11 can then itself compute the SUCI (instead of the secure element 10). In this case, the ME 11 sends to the secure element 10 a request of information for SUCI calculation.

The invention also concerns a secure element 10 cooperating with an equipment 11, the secure element 10 being configured for performing a registration with the SNPN 12 when the equipment 11 requires either the secure element 10 to perform the SUCI calculation, or the secure element 10 to provide information for a SUCI calculation, the secure element 10 comprising a list of SNPN-IDs and a list of corresponding public keys, the secure element 10 being configured for: A - Receiving from the equipment 11 a request of a SUCI calculation or a request of information for SUCI calculation including a SNPN-ID of the SNPN 12 to access;
B - upon reception of the request from the equipment 11:
∘ selecting a public key from the list of public keys for computing the SUCI, the public key corresponding to the Home Network public key of the SNPN 12 identified by the SNPN-ID;
∘ generating the SUCI with the Home Network public key of the SNPN 12;
∘ sending the SUCI to the equipment 11, in order that the equipment 11 performs the registration to the SNPN 12 with the SUCI.

For this secure element 10, the request of a SUCI calculation or request of information for SUCI calculation can also include a registration reason for indicating to which service the equipment 11 wishes to access through the SNPN 12, the public key corresponding to the Home Network public key of the SNPN 12 identified by the SNPN-ID and to the registration reason.

The invention also concerns an equipment 11 cooperating with a secure element 10 to perform the registration to a SNPN 12 when the equipment 11 requires either the secure element 10 to perform SUCI calculation or the secure element 10 to provide information for a SUCI calculation, the secure element 10 comprising a list of SNPN-IDs and a list of corresponding public keys, the equipment 11 being configured for:
A - Sending to the secure element 10 a request of a SUCI calculation or a request of information for SUCI calculation including a SNPN-ID of the SNPN 12 to access;
B - after the secure element 10 has selected a public key from the list of public keys for computing the SUCI, the public key corresponding to the Home Network public key of the SNPN 12 identified by the SNPN-ID:
   ∘ Generating by the secure element 10 the SUCI with the Home Network public key of the SNPN 12 and sending the SUCI to the equipment 11, or
   ∘ Generating by the equipment 11 the SUCI with the Home Network public key of the SNPN 12, sent to the equipment 11 by the secure element 10;
C- Performing the registration of the equipment 11 to the SNPN 12 with the SUCI.

Here also, the request of a SUCI calculation or request of information for SUCI calculation can include a registration reason for indicating to which service the equipment 11 wishes to access through the SNPN 12, the public key corresponding to the Home Network public key of the SNPN 12 identified by the SNPN-ID and to the registration reason.

The invention applies to Stand-alone Non-Public Networks (SNPNs) and to non-public cellular networks (NPNs).

The advantages of the invention are that it enables subscriber privacy (concealed SUPI) in case of private network deployments where a credentials holder is used to perform the authentication of the user equipment accessing private networks, and that without this invention, the SUPI would be sent in clear text. Privacy is therefore ensured for accessing private networks.

## Claims

1. A method for an equipment (11) cooperating with a secure element (10) to perform the registration to a SNPN (12) when said equipment (11) requires either said secure element (10) to perform the SUCI calculation or said secure element (10) to provide information for a SUCI calculation by said equipment (11), said secure element (10) comprising a list of SNPN-IDs and a list of Home Network public keys, said method comprising:
A - Sending from said equipment (11) to said secure element (10) a request of a SUCI calculation or a request of information for SUCI calculation including a SNPN-ID of the SNPN (12) to access;
B - upon reception of said request from said equipment (11):
∘ said secure element (10) selects a Home Network public key from said list of Home Network public keys for computing said SUCI, said Home Network public key corresponding to the Home Network public key of said SNPN (12) identified by said SNPN-ID;
∘ said secure element (10) or said equipment (11) generates the SUCI with said Home Network public key of said SNPN (12);
C - Said equipment (11) performs the registration to said SNPN (12) with said SUCI.

2. A method according to claim 1 wherein said request of a SUCI calculation or said request of information for SUCI calculation also includes a registration reason for indicating to which service said equipment (11) wishes to access through said SNPN (12), said Home Network public key corresponding to the Home Network public key of said SNPN (12) identified by said SNPN-ID and to said registration reason.

3. A method according to claim 1 or 2 wherein said equipment (11) is a mobile equipment.

4. A secure element (10) cooperating with an equipment (11), said secure element being configured for performing a registration with a SNPN (12) when said equipment (11) requires either said secure element (10) to perform a SUCI calculation or said secure element (10) to provide information for a SUCI calculation, said secure element (10) comprising a list of SNPN-IDs and a list of Home Network public keys, said secure element (10) being configured for:
A - Receiving from said equipment (11) a request of a SUCI calculation or a request of information for SUCI calculation including a SNPN-ID of the SNPN (12) to access;
B - upon reception of said request from said equipment (11):
∘ selecting a Home Network public key from said list of Home Network public keys for computing said SUCI, said Home Network public key corresponding to the Home Network public key of said SNPN identified by said SNPN-ID;
∘ generating the SUCI with said Home Network public key of said SNPN (12);
∘ sending said SUCI to said equipment (11), in order that said equipment (11) performs the registration to said SNPN (12) with said SUCI.

5. A secure element (10) according to claim 4 wherein said request of a SUCI calculation or said request of information for SUCI calculation also includes a registration reason for indicating to which service said equipment (11) wishes to access through said SNPN (12), said Home Network public key corresponding to the Home Network public key of said SNPN (12) identified by said SNPN-ID and to said registration reason.

6. An equipment (11) cooperating with a secure element (10) to perform the registration to a SNPN when said equipment (11) requires either said secure element (10) to perform SUCI calculation or said secure element (10) to provide information for a SUCI calculation, said secure element (10) comprising a list of SNPN-IDs and a list of Home Network public keys, said equipment (11) being configured for:
A - Sending to said secure element (10) a request of a SUCI calculation or a request of information for SUCI calculation including a SNPN-ID of the SNPN (12) to access;
B - after said secure element (10) has selected a Home Network public key from said list of Home Network public keys for computing said SUCI, said Home Network public key corresponding to the Home Network public key of said SNPN (12) identified by said SNPN-ID:
∘ Generating by said secure element (10) the SUCI with said Home Network public key of said SNPN (12) and sending said SUCI to said equipment (11), or
∘ Generating by said equipment (11) the SUCI with said Home Network public key of said SNPN (12), sent to said equipment (11) by said secure element (10);
C - Performing the registration to said SNPN (12) with said SUCI.

7. An equipment (11) according to claim 6 wherein said request of a SUCI calculation or said request of information for SUCI calculation also includes a registration reason for indicating to which service said equipment (11) wishes to access through said SNPN (12), said Home Network public key corresponding to the Home Network public key of said SNPN (12) identified by said SNPN-ID and to said registration reason.
